# EUROPEAN PATENT SPECIFICATION

(11) **EP 0 466 329 B1**
(45) Date of publication and mention of the grant of the patent: **21.01.1998**
(21) Application number: 91305184.3
(22) Date of filing: 10.06.1991
(51) Int. Cl.: G11B 20/10, H03K 5/08

(54) **Apparatus for detecting digital data signals in a analog signal**
Gerät zur Detektion von digitalen Datensignalen in einem analog Signal
Appareil pour détecter des signaux de données digitales dans un signal analogique

(30) Priority: 11.06.1990 US 535697
(43) Date of publication of application: 15.01.1992
(73) Proprietor: International Business Machines Corporation, Armonk, N.Y. 10504 (US)
(72) Inventor: Cardero, Silvio, Tucson, Arizona 85749 (US); Goodman, Brian Gerard, Tucson, Arizona 85749 (US); Lewkowicz, Julian, Tucson, Arizona 85715 (US)
(74) Representative: Burt, Roger James, Dr.

(56) References cited:
- DE-A- 3 203 559
- FR-A- 2 565 746
- GB-A- 2 062 421
- GB-A- 2 172 467
- US-A- 3 838 448
- US-A- 4 087 840

## Description

The present invention relates to apparatus for detecting digital data signals in an analog readback signal from a data recording device, particularly those signals derived from the use of pulse-width modulation (PWM), to record data in an optical disk recorder.

Digital or digitised signal processing has always been sensitive to signal baseline shifts whenever a digital or bipolar readback signal was unbalanced towards one polarity or the other, the shift towards the dominant polarity brings the baseline towards that polarity.

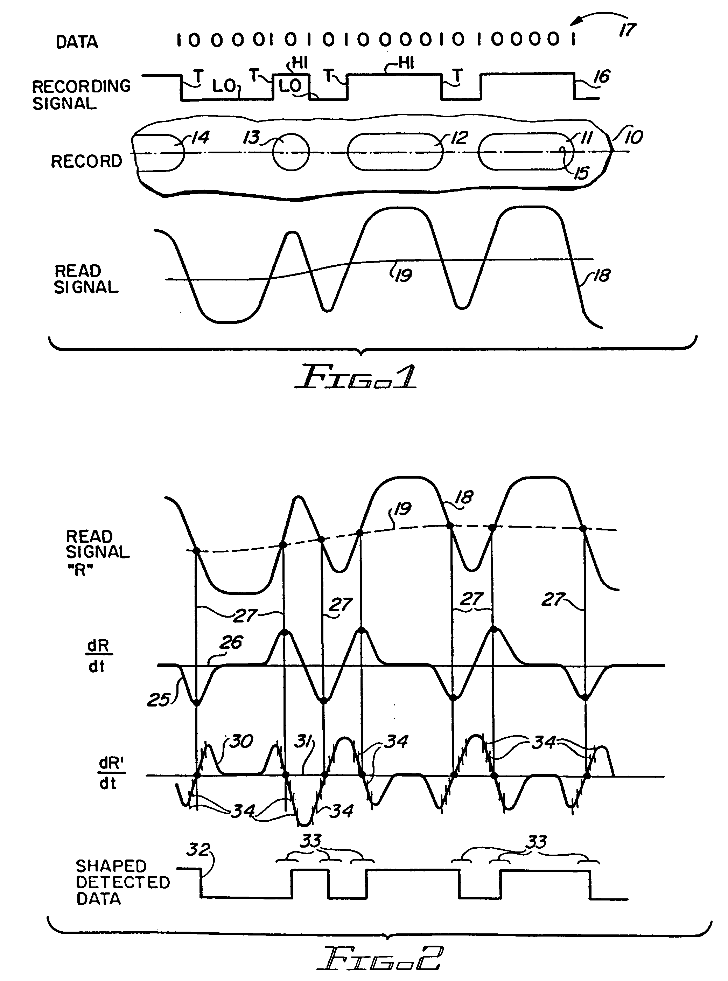

Digital waveforms (also known as binary signals), such as the NRZI pattern 16 shown in Figure 1 of the accompanying drawings, have no baseline shift (as defined below), which means that there are only two levels in that waveform. The waveform has a high level denoted HI, a low level denoted LO and transitions between the two levels denoted T. Idealised reproduction of a digital waveform requires a noiseless and infinite bandwidth linear analog channel.

When a digital waveform passes through an analog channel, such as a magnetic tape write/read channel or an optical disk write/read channel, it experiences distortions. Distortions are caused mainly by limited bandwidth of the channel and the addition of noise. High frequency limits or high frequency roll-offs of the channel cause high frequency (or short wavelength) signals to have less amplitude than low frequency (or long wavelength) signals. Signal 18 of Figure 1 illustrates high frequency roll-off distortions. AC coupling employed in channels to avoid DC shifts and drifts between different stages of signal processing circuits causes removal of the DC component of the signal and hence baseline shift. A baseline is an imaginary line connecting average points between two adjacent opposite peaks of an analog waveform. Baseline shift is illustrated by the position of the line 19 in Figure 1. Depending on wavelength and digital sequence, both high frequency roll-off and AC coupling cause analog signals to shift the baseline. Additional causes of the base line shift of a readback signal in an optical disk channel are changes in medium reflectivity and bi-refringence of the optical disk substrate. Because of the above reasons, the peaks and transitions in analog waveforms occur at different, often unpredictable, levels and are difficult to detect reliably by conventional fixed threshold detectors.

In a data signal detecting apparatus, baseline shift can cause an apparent shift in transition positions (the zero axis-crossings shift with baseline shifts). One way to accommodate or prevent some of the baseline shifts is to provide balanced codes; i.e., the amount of signal of one polarity is equal to the same amount of signal of the opposite polarity, such that the net DC component of the signal is zero. This increases the overhead of the recorded data. Therefore, it is desirable to provide a data signal detection apparatus which rapidly compensates for any DC shift in signal baseline.

The simplest way to detect analog data readback signal transitions, which are carrying digital information, for example, is to compare the amplitude of the analog signal waveform with a fixed amplitude threshold. In such detection, each time the analog signal amplitude crosses the threshold, a transition is indicated. One example of said a system is described in US-A-4087840 which describes how detection of small spurious crossings of the threshold can be prevented by gating the detection circuit with pulses derived from a comparison of the differentiated readback signal with threshold levels. However, the slope of the analog signal transition; i.e., at the zero axis crossing, depends on many factors, including the read-channel bandwidth and its characteristics. Generally, the lower the bandwidth, the lower the slope. The lower the slope, the more difficult it is to obtain a precise location of the zero axis crossing, as is necessary in detecting pulse-width modulated signals. Also, it is well known that the analog signal baseline (DC level) is constantly moving. The real crossing point between the analog signal and the fixed threshold will shift causing data detection errors. If the analog signal moves entirely above or below the fixed threshold, the transition detection fails. In an optical disk recorder, baseline movements of a readback signal, which is turned into an analog signal, take place towards either polarity and dynamically change because of the often-used alternating current (AC) coupling, of changes in medium reflectivity and of bi-refringence of the substrate through which a reading or sensing laser beam passes to reach the recording layer of the optical medium.

Because of the above-described baseline shifting, a common readback data signal transition detection method is to differentiate the received analog signal and then peak detect the differentiated signal. The differentiated signal is often differentiated a second time in order to obtain a zero axis crossing, which is in time-coincidence with each peak in the differentiated signal. By detecting the zero axis crossings of the analog readback signal coinciding with the peaks in the differentiated signal, binary ones are detected. A problem with a detection process using differentiation is the increase in noise associated with the differentiating process. The differentiating, of course, increases the high-frequency response in the read channel and boosts high frequency noise. Theoretically, a reduction in the signal-to-noise ratio is about six decibels. It is desired to avoid this problem and yet decrease sensitivity to baseline shifting by accommodating this detection process to the baseline shifting.

Differentiation of a readback signal is also used to time the detection; that is, the zero crossing of the differentiated signal is time coincident with the peak of the readback signal. US -A- 4,475,183 shows such a system. This system is also subject to phase shifting of the transition position in the detection process, which is to be avoided.

US -A- 4,418,406 shows a signal-wave control circuit having a comparator for receiving an input signal and a second input to the comparator for receiving a reference level signal. An output terminal carries the output signal having positive and negative portions corresponding to the input signal. A detector detects the maximum or minimum transition interval included in the output signal for producing a detected signal. A hold circuit holds the detected signal and a control circuit produces the reference level signal whereby the interval of the positive portion of the output signal and the interval of the negative portion of the output signal become equal. The circuit then is a system for removing the effects of DC-baseline shifts and analog signals. This circuit requires a balanced run length limited code system which, as discussed above, increases the overhead of the data recording system; therefore, a more flexible baseline accommodation system is desired than that shown in US -A- 4,418,406.

The object of the present invention is to provide an improved apparatus for detecting digital data signals in a readback signal from a data recording system.

The present invention provides apparatus for detecting digital information in an analog data signal, including in combination: means for receiving said analog data signal carrying said digital information in the form of successive transitions in signal level; means for differentiating the received data signal to supply a differentiated signal; peak circuit means for receiving the differentiated signal and detecting the positive and negative peaks thereof by comparing the differentiated signal with respective thresholds to produce peak indicating pulses coincident with corresponding transitions of the received data signal; characterised in that the apparatus further comprises: sample and hold circuit means connected to the receiving means to receive said received data signal and responsive to the output of the peak circuit means to sample and store the received data signal during each peak indicating pulse and to generate a variable detection threshold from said stored samples; and detection circuit means arranged to compare the received data signal with said detection threshold to detect crossings thereof which represent said digital information.

Preferably, successive samples are averaged to generate said variable detection threshold.

From another aspect, the invention also provides a data playback device for playing back recorded data from a record medium including means for sensing the recorded data from the medium and for supplying a readback analog data signal, means for receiving said analog data signal carrying said digital information in the form of successive transitions in signal level, means for differentiating the received data signal to supply a differentiated signal, peak circuit means for receiving the differentiated signal and detecting the positive and negative peaks thereof by comparing the differentiated signal with respective thresholds to produce peak indicating pulses coincident with corresponding transitions of the received data signal; characterised in that the device further comprises sample and hold circuit means connected to the receiving means to receive said received data signal and responsive to the output of the peak circuit means to sample and store the received data signal during each peak indicating pulse and to generate a variable detection threshold from said stored samples; and detection circuit means arranged to compare the received data signal with said detection threshold to detect crossings thereof which represent said digital information.

In order that the invention may be more readily understood, embodiments of the invention will now be described with reference to the accompanying drawings, in which:
Figure 1 is a diagrammatic showing of a portion of an optical disk having pulse-width modulated signals recorded thereon and the resultant readback signal,
Figure 2 illustrates a known recorded data detection system using differentiated signals,
Figure 3 is a graph including a plurality of signals used to show the operation of a recorded data detection system according to the invention,
Figure 4 illustrates diagrammatically a data recording device and a detection system in accordance with the invention, and
Figure 5 illustrates, in diagrammatic form, an alternative detection system implementing the present invention, and
Figure 6 is a schematic diagram showing a sample, average and hold circuit usable with the detection systems illustrated in Figures 4 and 5.

Referring now more particularly to the drawings, like numerals indicate like parts of structural features in the various figures. With reference to Figure 1 portion 10 of an optical data recording disk shows a track having a track centreline 15 with recorded optically-sensible spots 11, 12, 13 and 14. The spots 11-14 can be either magneto-optically sensed on a magneto-optic medium, intensity-modulation sensed, such as in an ablative medium, or phase-modulation sensed, such as in a phase-changed medium, for example. The recorded spots 11-14 are on a planar surface of portion 10; i.e., no grooves are shown in this particular embodiment, it being understood that either a planar or a grooved optical medium may be employed. Further, the principles described herein may also be used with magnetic recording of some types.

A recording signal 16 is used to record the spots 11-14 representing the data 17 to be recorded, wherein the binary one is represented by a transition in a transition position, while a binary zero is represented by the absence of a transition in a transition position, along track 15. It is to be understood that the data recorded in marks 11-14 is represented by the durations of the pulses in the recording signal 16; i.e., the space between successive transitions to provide a pulse-width modulated signal. The principle of the invention described herein can also be applied to pulse-position modulation, wherein each of the positive peak positions represents a unique portion of the data 17.

The sensing of the recorded data on portion 10 results in a read or readback signal 18. Because of the imbalance in the recorded waveform and other factors, in the two successive long one-half wavelengths representing the spots 11 and 12, the read signal DC baseline 19 is shifted towards one polarity of the read signal, represented by an upward shift in Figure 1. According to the principle of the present invention, the shifting of the DC baseline 19 is accommodated at each of the transition positions representing a binary one in data 17.

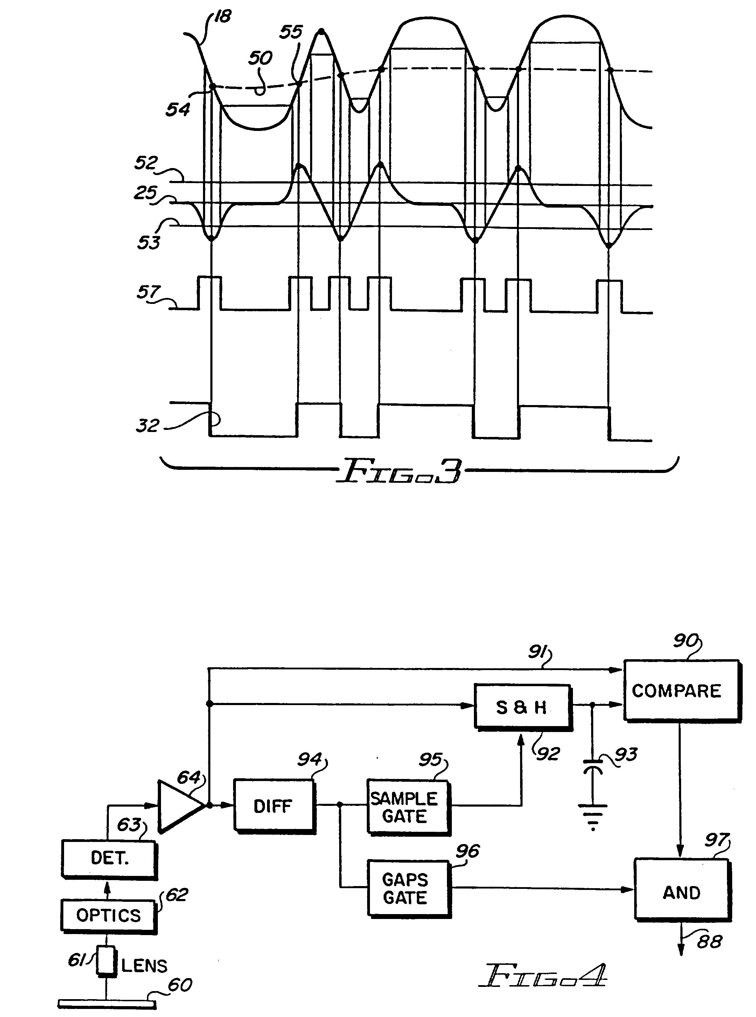

Figure 2 illustrates a known technique for amplitude-detecting digital data signals in a read or readback signal 18, even with a shifted DC base-line 19. It is to be understood that noise is introduced into the readback channel and the possibility of missing data or of getting erroneous data is relatively high in recording systems which are designed for low density recording. Noise caused by high frequency boost can introduce errors in the data detection process. This shifting is often referred to as jitter. The brackets 33 indicate the ranges where unintended transition position changes caused by.noise are likely to occur, as represented by hash marks 34 on signal 30. The read signal, R, is differentiated (dR/dt) to produce a differentiated signal 25 having a constant baseline 26. The differentiated signal 25 is again differentiated to obtain signal 30 (dR'/dt) having a baseline 31. The zero axis crossings of signal 30 are used to time the detection of the peaks in signal 25 for producing a shape-detected data output signal 32. The false zero crossings of signal 30 have to be eliminated, such as by sensing the low-amplitude portion of signal 25.

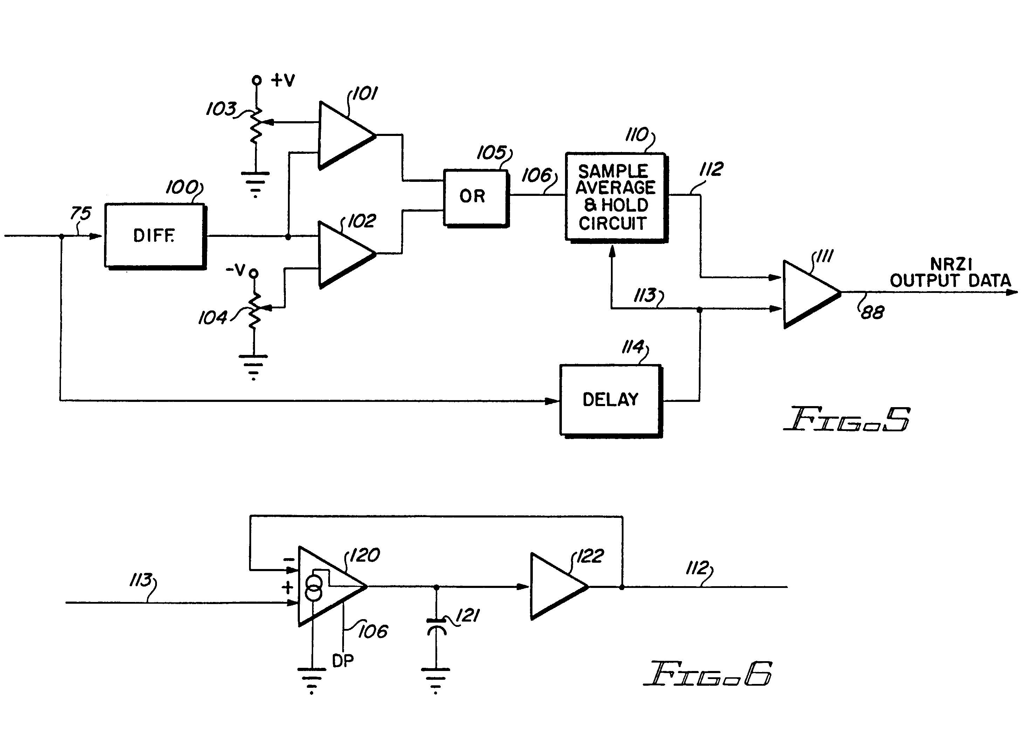

Figure 3 shows a set of signal waveforms usable to describe the operation of the system illustrated in Figure 4, wherein the detection threshold 50 follows the shifting DC baseline based upon transition sampling. In this system, readback signal 18 is analysed to produce a tracking or detection threshold 50, which shifts with DC baseline shifting, and is differentiated to produce a signal 25. A pair of amplitude thresholds 52 and 53 provide for peak detection of differentiated signal 25 to identify the zero axis or DC baseline crossings of readback signal 18. The baseline values are adjusted at each zero axis crossing of readback signal 18. Numerals 54 and 55 represent samples of falling and rising transitions in signal 18, respectively, which are sampled and averaged to derive the detection threshold 50. After sampling and averaging each transition, it is stored by a sample and hold circuit, later described, which holds the level of the derived tracking or detection threshold 50. Signal 57 is a unipolar set of signals corresponding to the sampling periods of the positive and negative peaks of differentiated signal 25. The NRZI readback data signal 32 is generated by detecting signal 18 crossing the threshold 50. Figures 4 and 5 illustrate a data recording device and detection circuits which use the Figure 3 technique of data detection which has dynamic baseline shift accommodation.

Referring next to Figure 4, an optical disk 60, of which portion 10 is a part, is sensed in the usual manner using a laser (not shown) with a focusable and movable lens 61 and optics 62. The operation of focusing and positioning the lens 61 with respect to optical disk 60 is well known and is not described for that reason. Optics 62 can be those optics used for magneto-optic signal detection, phase-change signal detection, and the like. A detector 63 suitable for all the recording systems senses the recorded data and supplies readback signal 18 to read amplifier 64 which supplies an amplified version to the illustrated detection circuit.

This circuit implements the transition-position detection aspect of the system described above with reference to Figure 3. Operational amplifier 64 supplies the amplified readback signal 18 over line 91 to compare circuit 90. Readback signal 18 is also supplied to sample and hold circuit S & H 92, which is triggered to sample the signal as described for Figure 3. Differentiator 94 creates signal 25, which is compared with the amplitude thresholds 52 and 53 to activate sample gate 95 for both the positive and negative amplitude excursions of signal 25 beyond the thresholds 52 and 53. Two successive integrations of the sampled and held amplitudes 54 and 55 are supplied into integration capacitor 93 to supply the signal representing the threshold 50 to compare circuit 90. Note that the signal integration, in capacitor 93, is a time-amplitude integration to provide an indication of the transitions. Capacitor 93 is sufficiently large that detection threshold 50 shifts less dynamically than threshold 42. Results of the comparison 90, between the read signal 18 and the threshold 50, are passed to AND 97, to provide the NRZI pulses 32 when AND 97 is gated by the output of Gaps Gate 96.

Gaps gate 96 enables AND 97 only when data signals are being sensed, to pass digital signal 32 from comparator 90 to line 88. Positive and negative peaks of the signal 25 exceeding the positive and negative thresholds 52 and 53 respectively generate the pulses 57. Pulses 57 are used to develop a gap gating function through gaps gate 96. Gaps gate 96 responds to the signal 25 supplied by differentiator 94 to indicate when a true data signal is being received. Many recordings have gaps or areas of no signal between recorded blocks of signals. Gaps gate 96 detects such gaps and signal blocks in a known manner, such as by envelope detection, by integration, and the like. Gaps gate 96 gates detected signal 32 out of AND gate 97.

Figure 5 shows another circuit which detects zero axis or DC baseline crossings of signal 18. Line 75 carries the operational amplifier 64 signal to differentiator 100 which generates signal 25 (Figure 3). Signal 25 goes to a pair of peak-amplitude comparison detectors 101 and 102. Comparator 101 has a reference value supplied by potentiometer 103 which generates a voltage threshold 52 (see figure 3). Whenever signal 25 exceeds threshold 52 comparator 101 supplies a signal to OR gate 105 cause delayed readback signal from delay 114 to be sampled, held and averaged in circuit 110. Similarly, for the negative excursions of differentiated signal 25, potentiometer 104 generates voltage threshold 53, which is supplied to the reference input of switching comparator 102. Whenever signal 25 exceeds threshold 53, a signal is supplied to OR circuit 105 to be passed to sample, average and hold circuit 110 causing it to sample delayed readback signal from delay 114. It should be noted that these signals are of the same duration and same amplitude; therefore, these signals are representative of the readback signal transition positions.

Figure 6 illustrates a preferred construction of the sample average and hold circuit 110 illustrated in Figure 5, a known arrangement. The readback signal 18 on line 113 is supplied as one input to a switching amplifier 120. The peak indicating signal on line 106, supplied by OR circuit 105, turns on charge pump 120 to sample the amplitude of the readback signal 18 and compare it with the current value of the detection threshold 50 on line 112. The amplitude difference detected by circuit 120 between the input value and the current reference value adjusts the stored voltage in capacitor 121 during the duration of the peak indicating pulses 57. Stored values continue to be supplied to operational amplifier 122, which supplies the tracking detection threshold signal 50 on line 112. The Figure 6 illustrated circuits may replace S & H 92 and capacitor 93 of Figure 4.

## Claims

1. Apparatus for detecting digital information in an analog data signal (18), including in combination:
means (64) for receiving said analog data signal (18) carrying said digital information in the form of successive transitions in signal level;
means (94) for differentiating the received data signal to supply a differentiated signal (25);
peak circuit means (95) for receiving the differentiated signal and detecting the positive and negative peaks thereof by comparing the differentiated signal (25) with respective thresholds to produce peak indicating pulses (57) coincident with corresponding transitions of the received data signal; characterised in that the apparatus further comprises:
sample and hold circuit means (92) connected to the receiving means to receive said received data signal and responsive to the output of the peak circuit means (95) to sample and store the received data signal during each peak indicating pulse (57) and to generate a variable detection threshold (50) from said stored samples; and
detection circuit means (90) arranged to compare the received data signal with said detection threshold (50) to detect crossings thereof which represent said digital information.

2. Apparatus as claimed in claim 1 wherein the sample and hold circuit means includes averaging means (110, 121) for averaging successive samples to generate said variable detection threshold.

3. Apparatus as claimed in claim 1 further comprising a delay (114) for delaying the received data signal prior to its receipt by the sample and hold circuit.

4. A data playback device for playing back recorded data from a record medium (60) including the apparatus of claim 1 and further including
means (61,62,63,64) for sensing the recorded data from the medium and for supplying a readback analog data signal to said apparatus as said analog data signal (18).

5. A data playback device as claimed in claim 4 in which the means for sensing the recorded data include optical sensing means.

## Patentansprüche

1. Gerät zur Detektion von digitalen Informationen in einem analogen Datensignal (18), wobei dieses Gerät in einer Kombination folgendes umfaßt:
ein Mittel (64) für den Empfang des genannten analogen Datensignals (18), das die genannten digitalen Informationen in Form aufeinanderfolgender Übergänge des Signalpegels trägt;
ein Mittel (94) zur Differenzierung des empfangenen Datensignals, um ein differenziertes Signal (25) bereitstellen zu können;
ein Spitzenschaltungsmittel (95) für den Empfang des differenzierten Signals und für die Detektion der positiven und negativen Spitze dieses Signals durch den Vergleich des differenzierten Signals (25) mit entsprechenden Schwellenwerten, um Spitzenanzeigeimpulse (57) zu erzeugen, die mit entsprechenden Übergängen des empfangenen Datensignals übereinstimmen; dadurch charakterisiert, daß das genannte Gerät weiterhin folgendes umfaßt:
ein Tastspeicherschaltungsmittel (92), das an das Empfangsmittel angeschlossen ist, um das genannte empfangene Datensignal zu empfangen und als Antwort auf den Ausgang des Spitzenschaltungsmittels (95) das empfangene Datensignal während jedes Spitzenanzeigeimpulses (57) abzutasten und zu speichern und auf der Grundlage der genannten gespeicherten Abtastwerte einen variablen Detektionsschwellenwert (50) zu erzeugen; und
ein Detektionsschaltmittel (90), das so angeschlossen ist, daß es das empfangene Datensignal mit dem genannten Detektionsschwellenwert (50) vergleicht, um Kreuzungsbereiche dieser Signale zu erkennen, die die genannten digitalen Informationen darstellen.

2. Ein Gerät gemäß Anspruch 1, bei dem das Tastspeicherschaltungsmittel ein Mittelbildungsmittel (110,121) zur Mittelbildung auf der Basis der aufeinanderfolgenden Abtastwerte umfaßt, um den genannten variablen Detektionsschwellenwert zu erzeugen.

3. Ein Gerät gemäß Anspruch 1, das weiterhin eine Verzögerung (114) zur Verzögerung des empfangenen Datensignals, bevor es von der Tastspeicherschaltung empfangen wird, umfaßt.

4. Ein Datenwiedergabegerät zur Wiedergabe aufgezeichneter Daten von einem Aufzeichnungsmedium (60) einschließlich des Geräts gemäß Anspruch 1, das weiterhin folgendes umfaßt:
ein Mittel (61,62,63,64) für das Abgreifen der aufgezeichneten Daten vom Medium und zur Bereitstellung einer Einleseoperation für das Einlesen des analogen Datensignals als analoges Datensignal (18) in das genannte Gerät.

5. Ein Datenwiedergabegerät gemäß Anspruch 4, bei dem das Mittel für das Abgreifen der aufgezeichneten Daten ein optisches Abgreifmittel umfaßt.

## Revendications

1. Appareil pour détecter une information numérique dans un signal de données analogiques (18), comprenant en combinaison:
un moyen (64) pour recevoir ledit signal de données analogiques (18) comportant ladite information numérique sous la forme de transitions successives du niveau du signal;
un moyen (94) pour différentier le signal de données reçu pour fournir un signal différencié (25);
un moyen (un circuit) de crête (95) pour recevoir le signal différencié et en détecter les crêtes positives et négatives en comparant le signal différencié (25) avec des seuils respectifs pour produire des impulsions (57) indiquant les crêtes, et qui coïncident avec des transitions correspondantes du signal de données reçu;
caractérisé en ce que l'appareil comprend en outre:
un moyen (un circuit) d'échantillonnage et de sauvegarde (92) connecté au moyen de réception pour recevoir ledit signal de données reçu et qui, en réponse à la sortie du circuit de crête (95), échantillonne et enregistre le signal de données reçu pendant la durée de chaque impulsion (57) indiquant une crête et, crée un seuil de détection variable (50) à partir des dits échantillons enregistrés; et
un moyen (un circuit) de détection (90) conçu pour comparer le signal de données reçu au dit seuil de détection (50) pour en détecter les croisements qui représentent ladite information numérique.

2. Appareil selon la revendication 1, où ledit circuit d'échantillonnage et de sauvegarde comprend un moyen de calcul de la moyenne (110, 121) pour faire la moyenne d'échantillons successifs pour créer ledit seuil de détection variable.

3. Appareil selon la revendication 1, comprenant en outre un retardateur (114) pour retarder le signal de données reçu avant sa réception par le circuit d'échantillonnage et de sauvegarde.

4. Dispositif de lecture des données pour lire des données enregistrées sur un support d'enregistrement (60), comprenant l'appareil de la revendication 1 et comprenant en outre:
un moyen (61, 62, 63, 64) pour détecter les données enregistrées sur le support et pour fournir au dit appareil un signal de données analogiques de relecture, comme signal de données analogique (18).

5. Dispositif de lecture des données selon la revendication 4, où le moyen pour détecter les données enregistrées comprend un moyen de détection optique.
